# EUROPÄISCHE PATENTSCHRIFT

(11) **EP 2 223 060 B1**
(45) Veröffentlichungstag und Bekanntmachung des Hinweises auf die Patenterteilung: **29.08.2018**
(21) Anmeldenummer: 08862471.3
(22) Anmeldetag: 12.12.2008
(51) Int. Cl.: G01F 23/00, G01F 23/26, G01F 23/284

(54) **VORRICHTUNG ZUR ERMITTLUNG UND/ODER ÜBERWACHUNG ZUMINDEST EINES FÜLLSTANDS VON ZUMINDEST EINEM MEDIUM IN EINEM BEHÄLTER GEMÄß EINER LAUFZEITMESSMETHODE UND/ODER EINER KAPAZITIVEN MESSMETHODE**
DEVICE FOR DETERMINING AND/OR MONITORING AT LEAST ONE FILL LEVEL OF AT LEAST ONE MEDIUM IN A TANK USING A RUN-TIME MEASUREMENT METHOD AND/OR A CAPACITATIVE MEASUREMENT METHOD
DISPOSITIF DE DÉTERMINATION ET/OU DE SURVEILLANCE D'AU MOINS UN NIVEAU D'AU MOINS UN MILIEU DANS UN CONTENANT, PAR UN PROCÉDÉ DE MESURE DU TEMPS DE TRANSIT ET/OU UN PROCÉDÉ DE MESURE CAPACITIF

(30) Priorität: 18.12.2007 DE 102007061573
(43) Veröffentlichungstag der Anmeldung: 01.09.2010
(73) Patentinhaber: Endress+Hauser SE+Co. KG, 79689 Maulburg (DE)
(72) Erfinder: ARMBRUSTER, Ralf, 79227 Schallstadt (DE); GROZINGER, Roland, 79129 Staufen (DE); MICHALSKI, Bernhard, 79689 Maulburg (DE)
(74) Vertreter: Andres, Angelika Maria
(86) Internationale Anmeldenummer: PCT/EP2008/067371
(87) Internationale Veröffentlichungsnummer: WO 2009/077435

(56) Entgegenhaltungen:
- EP-A- 1 306 105
- WO-A-95/16190
- DE-A1- 4 345 242
- DE-A1- 10 037 715

## Beschreibung

Die Erfindung betrifft eine Vorrichtung zur Ermittlung und/oder Überwachung zumindest eines Füllstands von zumindest einem Medium in einem Behälter gemäß einer Laufzeitmessmethode und/oder einer kapazitiven Messmethode mittels zumindest einer Messsonde, welche Vorrichtung umfasst, eine kapazitive Messschaltung, die ein niederfrequentes Messsignal auf der Messsonde erzeugt und dadurch eine Ermittlung der Kapazität oder eines Blindwiderstands durchführt, eine Zeitbereichsreflektometer-Messschaltung, die ein hochfrequentes, elektromagnetisches Messsignal erzeugt, über die Messsonde als ein Sendesignal aussendet, ein Reflexionssignal als Echo empfängt und aus einer Zeitdifferenz der Aussendung des Sendesignal und des Empfangs des Reflexionssignal wird eine Laufzeit oder sogar eine von der Laufzeit abhängige Echokurve ermittelt, und eine Regel-/Auswerteeinheit, die die beiden Messschaltungen ansteuert und die aus der ermittelten Kapazität, dem ermittelten Blindwiderstand, der ermittelten Laufzeit und/oder der ermittelten Laufzeit abhängige Echokurve den Füllstand ermittelt.

Derartige Vorrichtungen sind beispielsweise in Messgeräten bzw. Feldgeräten der Prozessmesstechnik zu finden. Diese Messgeräte werden häufig in der Automations- und Prozesssteuerungstechnik eingesetzt, um eine Prozessvariable wie z.B. Grenzschicht, Füllstand, Dielektrizitätskonstante oder eine andersartige physikalische und/oder chemische Prozessgröße in einem Prozessablauf zu ermitteln. Von der Anmelderin werden beispielsweise Messgeräte unter dem Namen Levelflex und Multicap produziert und vertrieben, die vorwiegend dazu bestimmt sind, den Füllstand eines Mediums in einem Behälter zu bestimmen und/oder zu überwachen. In einer der Vielzahl von Laufzeit-Messmethode wird beispielsweise nach der Methode der geführten Mikrowelle, Zeitbereichreflektometrie bzw. der TDR-Messmethode (Time Domain Reflection) ein Hochfrequenzimpuls entlang eines Sommerfeldschen oder Goubauschen Wellenleiters oder Koaxialwellenleiters ausgesendet, welcher bei einer Diskontinuität des DK-Wertes (Dielektrizitätskonstanten) des den Wellenleiter umgebenden Mediums teilweise zurückreflektiert wird. Aus der Zeitdifferenz zwischen dem Aussenden des Hochfrequenzimpulses und dem Empfang des reflektierten Echosignals des Mediums lässt sich der Füllstand ermittelten. Das FMCW-Verfahren (Frequency Modulated Continuous Waves), bei dem der Frequenzbereich eines kontinuierlichen Messsignal verändert und die Distanz durch die Frequenzdifferenz des ausgesendeten zum reflektierten Messsignal gemessen wird, ist in dem Zusammenhang mit dem obigen Messprinzip ebenfalls ausführbar.

Ein weiteres Messprinzip aus einer Vielzahl von Messmethoden den Füllstand in einem Behälter zu ermitteln, ist die Ermittlung der Kapazitätsänderung eines kapazitiven Messaufbaus mit einer das Medium berührenden Messsonde und der korrespondierenden Behälterwand oder Bezugssonde, wenn sich der Bedeckungsgrad der Messsonde mit dem Medium bzw. Füllstand des Mediums im Behälter ändert.

Bei beiden oben beschriebenen Verfahren handelt es sich um so genannte Mediums berührende Füllstandsmessverfahren, bei denen eine Messsonde mit dem zu messenden Medium direkt in Berührung kommt. Diese Messsonde wird üblicherweise, über einen Prozessanschluss, Öffnung oder Stutzen, in einem Behälter befestigt, so dass die Messelektronik sich außerhalb des Prozesses, d.h. nicht mit dem Medium in Kontakt stehend, befindet und die Messsonde in dem Prozess integriert ist. In den folgenden Referenzen werden Beispiele dieser beiden Verfahren näher diskutiert.

In der EP 1 069 649 A1 wird der Wellenleiter für ein Füllstandsmessgerät mit einem einfachen Aufbau gezeigt, der die Vorteile des Eindraht- und bekannter Mehrdraht-Wellenleiter vereint, indem er keine Wechselwirkung mit Behältereinbauten zeigt und der auf einfache Weise von An- bzw. Ablagerungen zu reinigen ist. Dies wurde erreicht, indem die Mehrdraht-Wellenleiter im Prozess zumindest teilweise von einem dielektrischen Medium umgeben sind und somit sich kein Ansatz zwischen den einzelnen Wellenleitern bilden kann.

In der DE 10157762 A1 wird ein Verfahren zur kapazitiven Füllstandsmessung eines Füllgutes in einem Behälter mit einer Messelektrode und einer Auswerteschaltung beschrieben, bei dem der kapazitiven Blindwiderstandes mittels zweier Wechselspannungssignale mit unterschiedlichen Frequenzen ermittelt wird und somit der ohmschen Widerstandes eliminiert wird.

Bei allen bekannten physikalischen Messprinzipien muss meist ein Kompromiss hinsichtlich der Genauigkeit der Messung und der Zuverlässigkeit der Messung eingegangen werden. Deshalb wird anhand der Umgebungsbedingungen und Mediumseigenschaften der entsprechenden Anwendung das zweckdienlichste physikalische Messprinzip ausgewählt, dessen Vorteile gegenüber dessen Nachteilen überwiegen. Grundlegend werden in der Prozessmesstechnik als frei abstrahlende Messverfahren unterschiedliche physikalische Messprinzipien, wie die Mikrowellen- Laufzeitmessung, der Ultraschall-Laufzeitmessung und Gammastrahlen-Absorbstionsmessung, sowie vereinzelt auch der Laserlicht-Laufzeitmessung, eingesetzt. Als Mediums berührende Messverfahren sind in der Prozessmesstechnik unter anderem das Lot-Messverfahren, das kapazitive Messverfahren, das konduktive Messverfahren und das Messverfahren mit der geführten Mikrowelle bekannt. Alle diese Messverfahren haben entsprechend dem Messprinzip, dem Messmedium, der Messsituation, den Prozessbedingungen und dem Messperformance bestimmte Vorteile gegenüber einem anderen Messverfahren.

Der direkte Vergleich der verschiedenen physikalischen Messprinzipien zeigt, dass die Auswahl das für die aktuelle Anwendung geeigneten Messprinzips in den meisten Fällen sehr schwer ist. Jedoch lassen sich im Bereich der Trennschichtmessung schon eine Vielzahl von Anwendungen durch die hoch entwickelten, Mediums berührenden Messgeräte oder Kombinationen dieser Messgeräte abdecken.

Ein Füllstandsmessgerät bei dem beide, Mediums berührende Messverfahren zum Einsatz kommen, ist in der Patentanmeldung DE 100 37 715 A1 beschrieben. In dieser Druckschrift wird ein Füllstandsmessgerät beschrieben, dessen Medium berührende Messsonde über einen Umschalter mit dem kapazitiven Messschaltung oder dem Laufzeitmessschaltung verbunden wird. Nachteile an dieser Ausgestaltung sind, dass es sich bei diesem Umschalter in der Regel um ein Halbleiterbauelement handelt, weiches sich im Signalpfad relativ nahe an der Messsonde bzw. Sensor befindet und somit aufwendig gegen elektrostatische Entladungen geschützt werden muss. Desweiteren wird eine zusätzliche Steuerleitung und ein Steuersignal zum Schalten des Umschalters benötigt.

Es ist die Aufgabe der Erfindung, ein Medium berührendes Füllstandsmessgerät anzugeben, das eine optimierte Messgenauigkeit und eine optimierte Zuverlässigkeit aufweist und vorgestellte Nachteile vermeidet.

Diese Aufgabe wird erfindungsgemäß dadurch gelöst, dass eine Frequenzweiche vorgesehen ist, die das niederfrequente Messsignal und das hochfrequenten, elektromagnetischen Messsignal auf die Messsonde leitet und die eine signaltechnische Trennung des hochfrequenten, elektromagnetischen Messsignals in den ersten Signalpfad der Zeitbereichsreflektometer-Messschaltung und des niederfrequente Messsignals in den zweiten Signalpfad der kapazitiven Messschaltung bewirkt.

Gemäß der erfindungsgemäßen Lösung umfasst die Frequenzweiche zumindest einen auf das hochfrequente, elektromagnetische Messsignal abgestimmten Hochpass und einen auf das niederfrequente Messsignal abgestimmten Tiefpass.

Eine vorteilhafte Ausführungsform der erfindungsgemäßen Lösung ist darin zu sehen, dass der Hochpass aus zumindest einem ersten Kondensator und einer ersten Spule besteht.

In einer besonders bevorzugten Ausführungsform der Erfindung ist vorgesehen, dass der Tiefpass aus zumindest einer zweiten Spule besteht.

Gemäß einer vorteilhaften Ausführungsform der erfindungsgemäßen Vorrichtung ist vorgesehen, dass die Messung gemäß einer Laufzeitmessmethode und/oder einer kapazitiven Messmethode alternierend erfolgt und die kapazitive Messschaltung und die Zeitbereichsreflektometer-Messschaltung von der Regel-/Auswerteeinheit abwechselnd angesteuert und ausgewertet werden.

Eine vorteilhafte Ausführungsform der erfindungsgemäßen Vorrichtung ist darin zu sehen, dass Messung gemäß einer Laufzeitmessmethode und/oder einer kapazitiven Messmethode gleichzeitig erfolgt und die kapazitive Messschaltung und die Zeitbereichsreflektometer-Messschaltung von der Regel-/Auswerteeinheit gleichzeitig angesteuert und ausgewertet werden.

Gegenstand der vorliegenden Erfindung ist ein Konzept für einen Multisensor bestehend aus einem kapazitiven Füllstandsensor mit einem Mikrowellen-Füllstandsensor anzugeben, das zur Verbesserung der Zuverlässigkeit und Genauigkeit der Füllstands bzw. Distanzmessung des Füllstandmessgerätes führt. Um eine erhöhte Genauigkeit und Zuverlässigkeit der Messung des Füllstands zu gewährleisten werden in der Prozessmesstechnik redundante Messgeräte zur Plausibilitätsbetrachtung und Kalibrierung der Messung verwendet. Dabei wird bei einer diveristären Redundanzbetrachtung der Messung angestrebt, die redundanten Messgeräte so unterschiedlich wie möglich zu realisieren. Beispielsweise wird um den Inhalt in einem großen Öltank zu bestimmen, ein Drucksensor im Tankbodenbereich, der den Füllstand anhand der hydrostatischen Füllstandsmessung bestimmt, und einmal ein Radar im Tankdeckelbereich, das den Füllstand anhand der Laufzeitmessmethode ermittelt. Durch die Verwendung von verschiedenen physikalischen Eigenschaften und verschiedenen Entwicklungen wird die Wahrscheinlichkeit, dass ein systematischer Fehler in den unterschiedlichen Messgräten sich gleich und gleichzeitig auswirkt, extrem niedrig. Dabei wird die diversitäre Redundanz von kapazitiven Messsignalen und Mikrowellen-Messsignalen dahingehend genutzt, dass einerseits die wesentlichen Störeinflüsse im Ausbreitungsweg sich unterschiedlich auf das elektromagnetische Messverfahren oder das kapazitive Messverfahren auswirken und andererseits dennoch die Messsignale trotz des verschiedenen Wirkprinzips redundante Messergebnisse liefern. Die Messsignale können somit ohne aufwendige und in der Regel verlustbehaftete Merkmalstransformationen auf der Messsignalebene verknüpft und insbesondere die Schwächen der Einzelsensoren überwunden werden.

Mit ihrem einfachen Aufbau und geringen Preis sind kapazitive Füllstandsmessgeräte seit langem in der Prozessmesstechnik etabliert. Durch die Fortschritte bei der Entwicklung von Mikrowellen- Komponenten und der Aufbautechnik sind auch Zeitbereichreflektometer zunehmend preiswert herstellbar. Nachteilig bei kapazitiven Messgeräten ist, das diese jedoch vielfältigen Einflüssen unterliegen: Gradienten in der Dielektrizitätszahl des Mediums, Temperaturgradienten, Strömungen oder sonstige stoffliche Veränderungen des Mediums machen sich in Amplituden- und Phasenfluktuationen des kapazitiven Messsignals bemerkbar. Demgegenüber werden Zeitbereichreflektometer von Veränderungen des Mediums auf dem Übertragungsweg nur sehr gering beeinflusst und die Ausbreitungsdämpfung ist äußerst gering.

Hohe Zuverlässigkeit der Messergebnisse bzw. der Sensoraussage bei geringer Querempfindlichkeit und hoher Störfestigkeit gegenüber Umwelteinflüssen und Rauschen stehen im Vordergrund jeder Sensorentwicklung. Zur Plausibilitätskontrolle von Messergebnissen und zur Senkung der Ausfallraten werden vielfach redundante Multisensorsysteme konstruiert, die mehrere gleichartige Einzelsensoren in einer Parallelstruktur vereinen. Mit der Auswertung der Empfangssignale verschiedenartiger Einzelsensoren mit Ausgangssignalen von komplementären Ereignissen wird eine Erweiterung des Ansprechverhaltens des Gesamtsensors angestrebt. Diese so genannten diversitären Multisensorsysteme haben in den letzten Jahren beständig an Attraktivität gewonnen und werden für vielfältige Aufgaben in der industriellen Prozessautomatisierungstechnik, wie beispielsweise der DE 100 37 715 A1 gezeigt, eingesetzt. In der DE 100 37 715 A1 wird eine Kombination von zwei Messverfahren zu Plausibilitätsbetrachtung der Messungen gezeigt, bei der der Füllstand abwechselnd oder gleichzeitig nach einer Laufzeitmessmethode eines Mikrowellen-Messsignals oder nach einer Kapazitätsmessung mittels einer Mediums berührenden Messsonde ermittelt wird. Die höhere Dimensionalität des Beobachtungsraumes führt zu Messergebnissen, die mit einfachen Mehrelementenanordnungen identischer Sensorelemente nicht erzielt werden können. Besondere Bedeutung für die Erweiterung der Möglichkeiten der Sensorik besitzen diversitäre Multisensorsysteme, die auf direkter Vergleichbarkeit der Nutzsignale beruhen, während Störsignale statistisch nicht korreliert sind. Mit Auswertung dieser sog. diversitären Redundanz weist das Fusionsergebnis eine signifikant erhöhte Robustheit gegenüber Störeinflüssen der Einzelsensoren auf; die Glaubwürdigkeit der Sensoraussage wird erhöht. Diesen Anspruch erfüllen in geeigneter Weise Sensorsysteme, die zur Medium berührenden Füllstandsmessung gleichzeitig ein kapazitives Messverfahren und ein Laufzeitmessverfahren mit Mikrowellen verwenden und die Redundanz der Empfangssignale aus einem sich überdeckenden räumlichen Erfassungsbereich einer Messsonde auswerten.

Ein weiterer Vorteil der Kombination beider Messverfahren ist, dass bei unterschiedlichen nicht mischbaren Medien in dem Behälter über die beiden unterschiedlichen Messverfahren eine Bestimmung der Trennschicht erfolgen kann. Bei organischen Lösungsmitteln wird zudem ein großer Teil der Mikrowellenstrahlung gar nicht nur an der Füllgutoberfläche reflektiert, sondern dringt in das Füllgut ein und wird stattdessen am Boden des Tanks oder an einer Trennschicht des unteren Mediums reflektiert. Durch diese zusätzlichen Reflektionen des Messsignals an den Trennschichten der unterschiedlichen, nicht mischbaren Medien im Behälter und dem Ende der Messsonde lassen sich die Füllstände der einzelnen Medien im Behälter bestimmen. Bei einem niedrigen Füllstand im Behälter kann dann das kleine Füllstandecho aufgrund einer Echoüberlagerung durch ein großes Echo des Tankbodens erkannten werden. Die kapazitive Füllstandsmessung hat dieses Problem nicht, falls die Dielektrizitätszahlen der Medien im Behälter bekannt sind. Durch eine geschickte Kombination der beiden Messverfahren, kann in diesen Fällen auch ein Messwert für den Füllstand ermittelt werden. In den Fällen, in denen die kapazitive Messung und die Zeitbereichreflektometer-Messung über einen gemeinsame Messsonde parallel eindeutige Ergebnisse liefern, kann die kapazitive Messung mit den Ergebnissen der Zeitbereichreflektometer-Messung kalibriert werden.

Weitere Einzelheiten, Merkmale und Vorteile des Gegenstandes der Erfindung ergeben sich aus der nachfolgenden Beschreibung mit den zugehörigen Zeichnungen, in denen bevorzugte Ausführungsbeispiele der Erfindung dargestellt sind. In den Figuren dargestellte Ausführungsbeispiele der Erfindung sind zur besseren Übersicht und zur Vereinfachung die Elemente, die sich in ihrem Aufbau und/oder in ihrer Funktion entsprechen, mit gleichen Bezugszeichen versehen.

Es zeigt:
Fig. 1 eine schematische Darstellung einer Multisensoreinheit nach dem Stand der Technik,
Fig. 2 eine schematische Darstellung eines Ausführungsbeispiels einer Multisensoreinheit mit einer Frequenzweiche als erfindungsgemäße Vorrichtung zur Messsignalseparierung, und
Fig. 3 eine schematische Darstellung eines Ausführungsbeispiels einer Multisensoreinheit mit einem Tiefpass und Hochpass als erfindungsgemäßen Vorrichtung zur Messsignalseparierung.

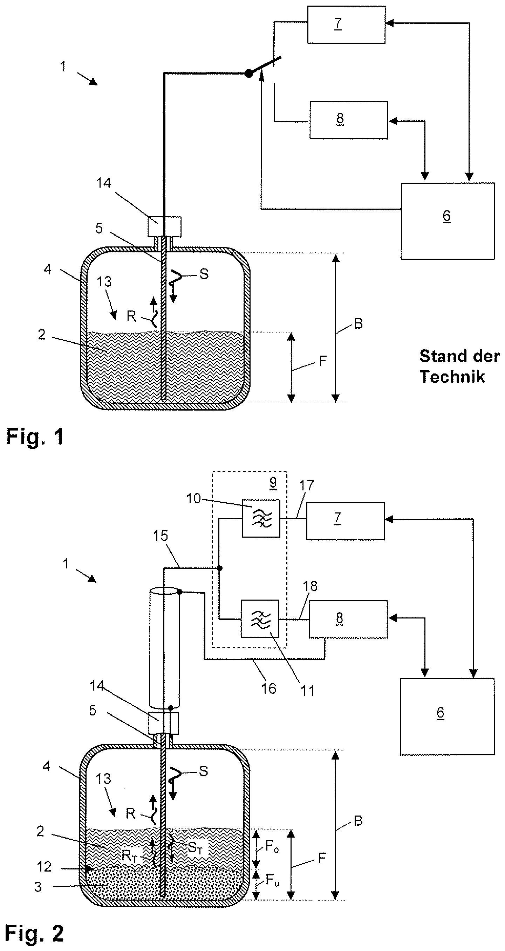

In der DE 100 37 715 A1 ist ein Multisensor zur Bestimmung des Füllstands F gezeigt, der aus einem kapazitiven Füllstandsmessgerät und einem Zeitbereichsreflektometer aufgebaut ist und in der Fig. 1 dargestellt ist. Dieser Multisensor aus einem Zeitbereichsreflektometer und einem kapazitiven Füllstandmessgerät wird zur Bestimmung des Füllstandes F eines Mediums 2 in einem Behälter 4 mit einer stab- oder seilförmiger Messsonde 5, eingesetzt. Durch einen Umschalter wird auf die Messsonde 5 das hochfrequente Messsignal M_{HF} der Zeitbereichreflektometer-Messschaltung 7 und/oder das niederfrequente Messsignal M_{NF} der kapazitiven Messschaltung 8 aufgeschaltet.

Wie schon beschrieben, ist der Nachteil an dieser Ausgestaltung, dass der Umschalter aus einem Halbleiterbauelement, z.B. einem MOSFET-Transistor, besteht, welches sich im Signalpfad relativ nahe an der Messsonde 5 bzw. Sensor befindet. Aufgrund dieser Ausgestaltung ist es notwendig, diesen Umschalter vor elektrostatische Entladungen auf der Messsonde 5 aufwendig geschützt werden muss. Desweiteren wird eine zusätzliche Steuerleitung und ein Steuersignal zum Ansteuern des Umschalters benötigt, wodurch durch diese zusätzliche Steuerleitung ein erhöhter Schaltungsaufwand notwendig ist.

Eine Möglichkeit diese Nachteile zu umgehen ist in der Fig. 2 als eine erfindungsgemäße Ausgestaltung der Vorrichtung 1 zur Bestimmung des Füllstands F in einem Behälter aufgezeigt. Die Vorrichtung 1 besteht aus einem Multisensor mit einem Zeitbereichreflektometer und einem kapazitiven Füllstandsmessgerät das zur Separierung des hochfrequenten Messsignals M_{HF} der elektromagnetischen Laufzeitmessung vom niederfrequenten Messsignal M_{NF} der kapazitiven Messung eine Frequenzweiche 9 aufweist.

Bei der Methode der geführten Mikrowelle, der Zeitbereichsreflektometrie bzw. der TDR - Messmethode (Time Domain Reflection) wird ein hochfrequentes Messsignal M_{HF} erzeugt und als ein Sendesignal S, z.B. ein 1,5 GHz-Mikrowellensignal, entlang einer Messsonde 5, z.B. einem Sommerfeldschen, einem Goubauschen Oberflächenwellenleiters oder einem Koaxialwellenleiters ausgesendet, welches bei einer Diskontinuität des DK-Wertes (Dielektrizitätskonstanten) der die Messsonde 5 umgebenden Medien 2, 3 zurückreflektiert wird. Durch die von den Medien 2, 3 verursachten Impedanzsprünge innerhalb des Prozessraums des Behälters 4, insbesondere an den Grenzschichten, z.B. der Oberfläche 13 oder der Trennschicht 12, der Medien 2, 3 im Behälter 4, wird das Sendesignal S und/oder das Transmissionsignal S_{T} zumindest teilweise zurück reflektiert. Aufgrund dessen ein entsprechendes, meist schwächeres Reflexionssignal R und/oder Trennschicht -Reflexionssignal R_{T} in entgegengesetzter Richtung an der Messsonde 5 und über die Messleitung 15 zur Sende-/Empfangseinheit der Zeitbereichsreflektometer-Messschaltung 7 zurück läuft. In der Zeitbereichsreflektometer-Messschaltung 7 wird aus der Laufzeitdifferenz der Sendesignale S, S_{T} zu den Reflexionssignalen R, R_{T} die entsprechenden Füllstände F, Fo, Fu ermittelt und an die Regel-/Auswerteeinheit 6 als Messwerte übermittelt. Die Regel-/Auswerteeinheit 6 ist beispielsweise als ein Mikrocontroller 6 ausgestaltet, der neben der Auswertung der Messwerte des Füllstände F, Fo, Fu noch weiter Regelungs- und Kommunikationsfunktionen im Messgerät durchführt. Die Messsonde 5 ist über ein Einkoppelelement 14 am Behälter 4 befestigt und über eine Messleitung, z.B. ein Koaxialkabel, mit der Frequenzweiche 9 verbunden.

Die Ausbildung einer Trennschicht 12 erfolgt bei zumindest zwei unterschiedlichen Medien 2, 3 im Behälter 4, die sich wie Wasser und Öl nicht vermischen. Um die Menge oder das Volumen beider Medien 2, 3 getrennt erfassen zu können, ist es erforderlich, den oberen Teilbereich des Füllstands F_{O} des oberen Mediums 2, den unteren Teilbereich des Füllstands F_{U} des unteren Mediums 3 oder die Trennschicht T zwischen den beiden Medien 2, 3 zu erfassen. Bei der Trennschichtmessung wird zusätzlich zum Reflektionssignal R an der Oberfläche 13 des ersten Mediums 2 ein weiteres Trennschicht-Reflektionssignal R_{T} an der Trennschicht 12 zwischen dem ersten Medium 2 und dem zweiten Medium 3 ermittelt. Mittels dieses Trennschicht-Reflektionssignals R_{T} ist es möglich, den oberen Teilbereich des Füllstands F_{O} eines ersten Mediums 2 und/oder den unteren Teilbereich des Füllstands F_{U} eines zweiten Mediums 3 zu bestimmen. Damit dieses Trennschicht-Reflektionssignal R_{T} ermittelt werden kann, ist es notwendig, dass nicht die gesamte Energie des Sendesignals S an der Oberfläche 13 des ersten Mediums 2 vollständig reflektiert wird, sondern ein Anteil des Sendesignals S als Transmissionssignal S_{T} in das erste Medium 2 transmittiert wird. Die Transmission und Reflexion des Sendesignals S und Trennschicht-Sendesignals S_{T} hängt hauptsächlich von den Dielektrizitätskonstanten der zu messenden Medien 2, 3 ab.

Diese Ausführungsform der Vorrichtung 1 wird auch ein kapazitives Messsystem mit einer kapazitiven Messschaltung 8 zur Bestimmung des Füllstandes F von Medien 2, 3 in einem Behälter 4 eingesetzt, wobei die zwischen der Messsonde 5 und einer Bezugselektrode oder der Wand des Behälters 4 durch ein niederfrequentes Messsignal M_{NF} ermittelte Kapazität vom Füllstand F und der Dielektrizitätszahl der Medien 2, 3 abhängig ist. Mit dem kapazitiven Messverfahren ist sowohl eine kontinuierliche Messung des Füllstandes F als auch die Signalisierung des Erreichens eines vorgegebenen Füllstandes F möglich, wobei im letzteren Fall es sich also um einen Grenzstandschalter handelt. Die Messsonde 5 und die Wand des Behälters 4 bilden einen Messkondensator C_{M}, dessen Dielektrikum die Medien 2, 3 in dem Behälter 4 sind. Die Kapazität dieses Messkondensators C_{M} ist dabei unter anderem vom Füllstand F der Medien 2, 3 abhängig, so dass aus der sich ändernden Kapazität auf den Füllstände F geschlossen werden kann. Wenn sich der Bedeckungsgrad des Messsonde 5 mit dem Medien 2, 3 bzw. der Füllstand der Medien 2, 3 im Behälter 4 ändert, wird eine nahezu proportionale Änderung der Kapazität des Messkondensators C_{M} von dem Messaufbau detektiert. Ein annähernd analoges Messprinzip beruht auf einem konduktivem Messverfahren, bei dem die Änderung der Leitfähigkeit in Abhängigkeit des Füllstands eines leitfähigen Mediums im Behälter ermittelt wird. Die unterschiedlichen Ausführungsbeispiele zur Messung der Kapazität lassen sich beispielsweise den Offenlegungsschriften DE 101 57 762 A1 oder der DE 101 61 069 A1 der Anmelderin entnehmen. Üblicherweise wird zur Messung des Kapazitätswerts die Messsonde 5 über die Messleitung 15 mit einem niederfrequenten Messsignal S_{NF} beaufschlagt, bei dem es sich beispielsweise um eine elektrische Wechselspannung im 20 kHz-Bereich handelt. Die kapazitive Messschaltung 8 ermittelt über die mit der Wand des Behälters 4 verbunden Masseleitung 14 und die über Frequenzweiche 9 mit der Messsonde 5 verbundenen Messleitung 15 die Kapazität des Messkondensators C_{M}. Da es sich erfahrungsgemäß um extrem kleinen elektrischen Kapazität oder Kapazitätsänderungen des Messkondensators C_{M} handelt, werden im Allgemeinen drei verschiedene Verfahren verwendet:
- Ladungsverstärker messen bei anliegender Gleichspannung die bei Kapazitätsänderungen des Messkondensators C_{M} verschobenen Elektronen und können daher ausschließlich schnelle oder kurzzeitige Änderungen erfassen,
- Amplitudenmodulierte Systeme versorgen den Messkondensator C_{M} mit hochfrequentem Wechselstrom und erfassen den resultierenden Blindstrom, und
- Frequenzmodulierte Systeme schalten den Messkondensator C_{M} mit einer Induktivität zu einem Schwingkreis zusammen, dessen Resonanzfrequenz gemessen werden kann.

Da beim Zeitbereichreflektometer-Messverfahren im Gegensatz zum kapazitiven Messverfahren mit wesentlich höheren Signalfrequenzen gearbeitet wird, kann durch eine frequenzselektive Schaltung bzw. Frequenzweiche 9 eine Separierung des niederfrequenten Messsignals M_{NF} von dem hochfrequenten Messsignal M_{HF} erreicht werden.

Die Frequenzweiche 9 ist erfindungsgemäß aus einem Hochpassfilter 10 für den ersten Signalpfad 17 der Zeitbereichsreflektometer-Messschaltung 7 und einem Tiefpassfilter 11 für den zweiten Signalpfad 18 der kapazitiven Messschaltung 8. Da es sich bei den Filterbauelementen der Frequenzweiche 9 bzw. des Hochpasses 10 und des Tiefpasses 11 nur um passive Bauteile wie Spulen L₁, L₂ und einen Kondensator C handelt, müssen diese auch nicht besonders gegen elektrostatische Entladungen (ESD) geschützt werden. Als weiterer Vorteil wird bei der erfindungsgemäßen Ausgestaltung der Vorrichtung 1 mit einer Frequenzweiche 9, gegenüber der Ausgestaltung mit einem Umschalter, kein zusätzliches Steuersignal zum Umschalten bzw. Separieren des niederfrequenten Messsignals S_{NF} oder des hochfrequenten Messsignals S_{HF} benötigt und ein gleichzeitiges Messen mittels beider Messverfahren ist möglich.

Um eine gegenseitige Beeinflussung der beiden Messverfahren zu vermeiden, sind zur Auslegung des Hochpasses 10 und des Tiefpasses 11 folgende Randbedingungen zu beachten:
- das Hochpass 10 im ersten Signalpfad 17 der Zeitbereichsreflektometer-Messschaltung 7 sollte für die hochfrequenten Messsignale S_{HF} durchlässig sein,
- der Tiefpass 11 im zweiten Signalpfad 18 der kapazitiven Messschaltung 8 darf die hochfrequenten Messsignale S_{HF} nicht zusätzlich dämpfen,
- der Tiefpass 11 im zweiten Signalpfad 18 der kapazitiven Messschaltung 8 sollte für die niederfrequenten Messsignale S_{NF} durchlässig sein, und
- die Kapazität des Kondensators C des Hochpass 10 sollte zumindest über die Temperatur möglichst konstant bleiben und als nicht zu großer Kapazitätswert ausgelegt sein.

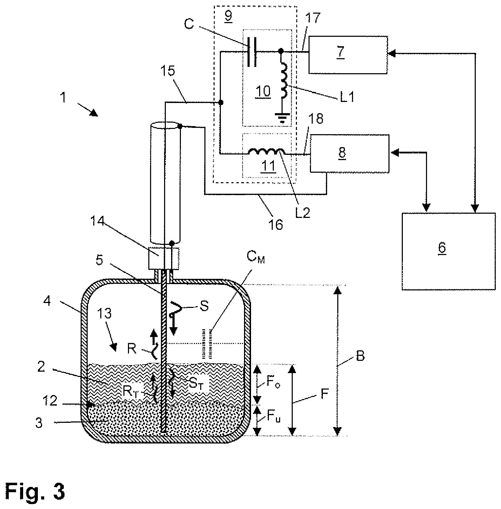

Nachfolgend wird in Fig. 3 beispielhaft eine solche Frequenzweiche 9 aus einem Hochpass 10 und einem Tiefpass 11 dargestellt. Der Hochpass 10 ist aus einem Kondensator C, der den ersten Signalpfad 17 eingefügt ist, und einer ersten Spule L₁, die nach dem Kondensator C mit dem einen Ende an den ersten Signalpfad angelegt ist und mit dem anderen Ende an Masse liegt, aufgebaut. Die Werte des Kondensators C und der ersten Spule L₁ werden so aufeinander abgestimmt, dass der Hochpass 10 das hochfrequente Messsignal M_{HF} nahezu ungehindert durchlässt und das niederfrequente Messsignal M_{NF} stark dämpft. Der Tiefpass 11 besteht nur aus einer zweiten Spule L₂ die in den zweiten Signalpfad 18 integriert ist. Der Kondensator C und die zweite Spule L₂ haben die Funktion die beiden Messsignale M_{HF}, M_{NF} voneinander zu entkoppeln bzw. separieren. Dabei ist der Kondensator C für das hochfrequente Messsignal M_{HF} niederohmig bzw. durchlässig und für das niederfrequente Messsignal M_{NF} stellt dieser eine vorbestimmte, konstante Kapazität dar. Dabei wird durch die erste Spule L₁ sichergestellt, dass der zweite Anschluss von C1 für die Kapazitätsmessung über Masse auf einem festen Nullpotential liegt und somit die Zeitbereichreflektometer-Messschaltung 7 keinen störenden Einfluss auf die Messung der kapazitiven Messschaltung 8 hat. Die zweite Spule L2 ist für die niederfrequente Messsignal M_{NF} der kapazitiven Messschaltung 8 niederohmig bzw. durchlässig und für die hochfrequente Messsignal M_{HF} hochohmig bzw. undurchlässig.

### Bezugszeichenliste

- 1: Vorrichtung
- 2: erstes Medium
- 3: zweites Medium
- 4: Behälter
- 5: Messsonde
- 6: Regel-/Auswerteeinheit, Mikrocontroller
- 7: Zeitbereichsreflektometer-Messschaltung
- 8: Kapazitive Messschaltung
- 9: Frequenzweiche, frequenzselektive Schaltung
- 10: Hochpass
- 11: Tiefpass
- 12: Trennschicht
- 13: Oberfläche
- 14: Einkopplung
- 15: Messleitung
- 16: Masseleitung
- 17: erster Signalpfad
- 18: zweiter Signalpfad
- C: Kondensator
- C_{M}: Messkapazität, Messkondensator
- L₁: erste Spule
- L₂: zweite Spule
- M_{NF}: niederfrequentes Messsignal
- M_{HF}: hochfrequentes Messsignal
- S: Sendesignal
- S_{T}: Transmissionssignal
- R: Reflexionssignal
- R_{T}: Trennschicht -Reflexionssignal
- F: Füllstand, Behälterfüllstand
- F_{O}: oberer Teilbereich des Füllstands
- F_{U}: unterer Teilbereich des Füllstands

## Patentansprüche

1. Vorrichtung (1) zur Ermittlung und/oder Überwachung zumindest eines Füllstands (F, F_{O}, F_{U}) von zumindest einem Medium (2, 3) in einem Behälter (4) gemäß einer Laufzeitmessmethode und/oder einer kapazitiven Messmethode mittels zumindest einer Messsonde (5), welche Vorrichtung (1) umfasst,
- eine kapazitive Messschaltung (8), die ein niederfrequentes Messsignal (M_{NF}) auf der Messsonde (5) erzeugt und dadurch eine Ermittlung der Kapazität oder eines Blindwiderstands durchführt,
- eine Zeitbereichsreflektometer-Messschaltung (7), die ein hochfrequentes, elektromagnetisches Messsignal (M_{HF}) erzeugt, über die Messsonde (5) als ein Sendesignal (S, S_{T}) aussendet, ein Reflexionssignal (R, R_{T}) als Echo empfängt und aus einer Zeitdifferenz der Aussendung des Sendesignal (S_{T}) und des Empfangs des Reflexionssignal (S_{R}) wird eine Laufzeit oder sogar eine von der Laufzeit abhängige Echokurve ermittelt, und
- eine Regel-/Auswerteeinheit (6), die die beiden Messschaltungen (7,8) ansteuert und die aus der ermittelten Kapazität, dem ermittelten Blindwiderstand, der ermittelten Laufzeit und/oder der ermittelten Laufzeit abhängige Echokurve den Füllstand (F, F_{O}, F_{U}) ermittelt,
**dadurch gekennzeichnet,**
**dass** eine Frequenzweiche vorgesehen ist, die das niederfrequente Messsignal (S_{NF}) und das hochfrequenten, elektromagnetischen Messsignal (S_{HF}) auf die Messsonde (5) leitet und die eine signaltechnische Trennung des hochfrequenten, elektromagnetischen Messsignals (S_{HF}) in den ersten Signalpfad (17) der Zeitbereichsreflektometer-Messschaltung (7) und des niederfrequente Messsignals (S_{NF}) in den zweiten Signalpfad (18) der kapazitiven Messschaltung (8) bewirkt, und
**dass** die Frequenzweiche (9) zumindest einen auf das hochfrequente, elektromagnetische Messsignal (S_{HF}) abgestimmten Hochpass (10) und einen auf das niederfrequente Messsignal (S_{NF}) abgestimmten Tiefpass (11) umfasst.

2. Vorrichtung nach zumindest einem der Ansprüche 1,
**dadurch gekennzeichnet,**
**dass** der Hochpass (10) aus zumindest einem ersten Kondensator (C) und einer ersten Spule (L1) besteht.

3. Vorrichtung nach zumindest einem der Ansprüche 1,
**dadurch gekennzeichnet,**
**dass** der Tiefpass (11) aus zumindest einer zweiten Spule (L2) besteht.

4. Vorrichtung nach Anspruch 1,
**dadurch gekennzeichnet,**
**dass** die Messung gemäß einer Laufzeitmessmethode und/oder einer kapazitiven Messmethode alternierend erfolgt und die kapazitive Messschaltung (8) und die Zeitbereichsreflektometer-Messschaltung (7) von der Regel-/Auswerteeinheit (6) abwechselnd angesteuert und ausgewertet werden.

5. Vorrichtung nach Anspruch 1,
**dadurch gekennzeichnet,**
**dass** die Messung gemäß einer Laufzeitmessmethode und/oder einer kapazitiven Messmethode gleichzeitig erfolgt und die kapazitive Messschaltung (8) und die Zeitbereichsreflektometer-Messschaltung (7) von der Regel-/Auswerteeinheit (6) gleichzeitig angesteuert und ausgewertet werden.

## Claims

1. Apparatus (1) designed for determining and/or monitoring at least a level (F, Fₒ, Fᵤ) of at least one medium (2, 3) in a vessel (4) according to a time-of-flight measurement method and/or a capacitance measurement method using at least one measuring probe (5), said apparatus (1) comprising
- a capacitance measuring circuit (8), which generates a low-frequency measuring signal (M_{NF}) on the measuring probe (5) and in this way determines the capacitance or a reactance,
- a time domain reflectometer measuring circuit (7), which generates a high-frequency electromagnetic measuring signal (M_{HF}), transmits a transmission signal (S, S_{T}) via the measuring probe (5), receives a reflection signal (R, R_{T}) as an echo and, on the basis of the difference in time between the transmission of the transmission signal (S_{T}) and the reception of the reflection signal (S_{R}), a time-of-flight, or even an echo curve that depends on the time-of-flight, is determined and
- a control/evaluation unit (6), which controls the two measuring circuits (7, 8) and which determines the level (F, F_{O}, Fᵤ) from the calculated capacitance, the calculated reactance, the calculated time-of-flight and/or the determined echo curve that depends on the time-of-flight
**characterized in that**
a diplexer is provided which routes the low-frequency measuring signal (S_{NF}) and the high-frequency electromagnetic measuring signal (S_{HF}) to the measuring probe (5) and which causes the separation of the high-frequency electromagnetic measuring signal (S_{HF}) to the first signal path (17) of the time domain reflectometer measuring circuit (7) and of the low-frequency measuring signal (S_{NF}) to the second signal path (18) of the capacitance measuring circuit (8), and **in that** the diplexer (9) consists at least of a high-pass filter (10) adapted to the high-frequency electromagnetic measuring signal (S_{HF}) and a low-pass filter (11) adapted to the low-frequency measuring signal (S_{NF}).

2. Apparatus as claimed in Claim 1,
**characterized in that**
the high-pass filter (10) consists at least of a first capacitor (C) and a first coil (L1).

3. Apparatus as claimed in Claim 1,
**characterized in that**
the low-pass filter (11) consists at least of a second coil (L2).

4. Apparatus as claimed in Claim 1,
**characterized in that**
the measurement is performed alternately according to a time-of-flight method and/or a capacitance measurement method and the capacitance measuring circuit (8) and the time domain reflectometer measuring circuit (7) are alternately controlled and evaluated by the control/evaluation unit (6).

5. Apparatus as claimed in Claim 1,
**characterized in that,**
the measurement is performed simultaneously according to a time-of-flight method and/or a capacitance measurement method and the capacitance measuring circuit (8) and the time domain reflectometer measuring circuit (7) are simultaneously controlled and evaluated by the control/evaluation unit (6).

## Revendications

1. Dispositif (1) destiné à la détermination et/ou la surveillance d'au moins un niveau (F, Fₒ, Fᵤ) d'au moins un produit (2, 3) dans un réservoir (4) selon une méthode de mesure du temps de propagation et/ou une méthode de mesure capacitive au moyen d'au moins une sonde de mesure (5), lequel dispositif (1) comprend
- un circuit de mesure capacitif (8), qui génère un signal de mesure basse fréquence (M_{NF}) sur la sonde de mesure (5) et effectue par ce biais une détermination de la capacité ou d'une réactance,
- un circuit de mesure à réflectomètre à domaine temporel (7), qui génère un signal de mesure électromagnétique haute fréquence (M_{HF}), émet un signal d'émission (S, S_{T}) via la sonde de mesure (5), reçoit un signal de réflexion (R, R_{T}) en tant qu'écho et détermine à partir d'une différence de temps entre l'émission du signal d'émission (S_{T}) et la réception du signal de réflexion (S_{R}) un temps de propagation ou même une courbe d'écho fonction du temps de propagation, et
- une unité de régulation / d'exploitation (6), qui contrôle les deux circuits de mesure (7, 8) et qui, à partir de la capacité déterminée, de la réactance déterminée, du temps de propagation déterminé et/ou de la courbe d'écho fonction du temps de propagation déterminée, détermine le niveau (F, F_{O}, Fᵤ),
**caractérisé**
**en ce qu'**est prévu un diplexeur, qui achemine le signal de mesure basse fréquence (S_{NF}) et le signal de mesure électromagnétique haute fréquence (S_{HF}) à la sonde de mesure (5) et qui provoque une séparation entre le signal de mesure électromagnétique haute fréquence (S_{HF}) dans le premier chemin de signal (17) du circuit de mesure à réflectomètre à domaine temporel (7) et le signal de mesure basse fréquence (S_{NF}) dans le deuxième chemin de signal (18) du circuit de mesure capacitif (8), et
**en ce que** le diplexeur (9) comprend au moins un filtre passe-haut (10) adapté au signal de mesure électromagnétique haute fréquence (S_{HF}) et un filtre passe-bas adapté au signal de mesure basse fréquence (S_{NF}).

2. Dispositif selon la revendication 1,
**caractérisé**
**en ce que** le filtre passe-haut (10) est constitué au moins d'un condensateur (C) et d'une première bobine (L1).

3. Dispositif selon la revendication 1,
**caractérisé**
**en ce que** le filtre passe-bas est constitué au moins d'une deuxième bobine (L2).

4. Dispositif selon la revendication 1,
**caractérisé**
**en ce que** la mesure selon une méthode du temps de propagation et/ou une méthode capacitive s'effectuent alternativement et en ce que le circuit de mesure capacitif (8) et le circuit de mesure à réflectomètre à domaine temporel (7) sont commandés et exploités alternativement par l'unité de régulation / d'exploitation (6).

5. Dispositif selon la revendication 1,
**caractérisé**
**en ce que** la mesure selon une méthode du temps de propagation et/ou une méthode capacitive s'effectuent simultanément et en ce que le circuit de mesure capacitif (8) et le circuit de mesure à réflectomètre à domaine temporel (7) sont commandés et exploités simultanément par l'unité de régulation / d'exploitation (6).
